# EUROPEAN PATENT APPLICATION

(11) **EP 4 607 630 A1**
(43) Date of publication of application: **27.08.2025**
(21) Application number: 23907697.9
(22) Date of filing: 19.12.2023
(51) Int. Cl.: H01M 10/04, B65H 19/10

(54) **TRANSPORT SYSTEM FOR TRANSPORTING CONNECTION MEMBERS**

(30) Priority: 23.12.2022 KR 20220183712
(71) Applicant: LG Energy Solution, Ltd., Seoul 07335 (KR)
(72) Inventor: JEONG, Ha Yong, Daejeon 34122 (KR); SUNG, Jin Kyoung, Daejeon 34122 (KR)
(74) Representative: Goddar, Heinz J.
(86) International application number: PCT/KR2023/021024
(87) International publication number: WO 2024/136414

(57) **Abstract**

A system for transferring a connection member according to one embodiment includes a power transmission member installed along a transfer path along which an electrode sheet is transferred, a moving member mounted on the power transmission member and moving along a certain movement path according to movement of the power transmission member, and a power generation unit configured to generate power to be transmitted to the power transmission member, wherein, when the electrode sheet is fractured, the power generation unit is provided to transmit the power to the power transmission member and transfer the connection member, which is provided to connect the fractured electrode sheet, along the movement path by the moving member.

## Description

### [TECHNICAL FIELD]

### CROSS CITATION WITH RELATED APPLICATIONS

This application claims priority to and the benefit of Korean Patent Application No. 10-2022-0183712 filed in the Korean Intellectual Property Office on December 23, 2022, the entire content of which is incorporated herein by reference.

### TECHNICAL FIELD

The present invention relates to a system for transporting a connection member.

### [BACKGROUND ART]

In order to solve the environmental pollution problem and the energy resource problem caused by the depletion of petroleum resources, research and development on electric power production based on eco-friendly energy sources is actively conducted. In particular, research on secondary batteries is actively conducted, and research is being conducted on various aspects such as materials, structures, processes, and stability of secondary batteries.

During various processes, an electrode sheet is subjected to a transfer process. When the electrode sheet is fractured during such a process, a task of reconnecting the fractured electrode sheet using a connection member is required.

According to the related art, when an electrode sheet was fractured during a transfer process, a manual task was performed to reconnect the fractured electrode sheet. When a connection member passed between rolls, it was difficult to easily transfer the connection member along a certain path, and it took a considerable for the connection member to be transferred. In addition, performing a task of connecting a fractured electrode sheet may take a considerable of time.

### [DISCLOSURE]

### [TECHNICAL PROBLEM]

The present invention is directed to providing a system for transferring a connection member, which is capable of, when an electrode sheet is fractured while being transferred, efficiently/effectively connecting the fractured electrode sheet.

### [TECHNICAL SOLUTION]

One aspect of the present invention provides a system for transferring a connection member, the system including a power transmission member installed along a transfer path along which an electrode sheet is transferred, a moving member mounted on the power transmission member and moving along a certain movement path according to movement of the power transmission member, and a power generation unit configured to generate power to be transmitted to the power transmission member, wherein, when the electrode sheet is fractured, the power generation unit is provided to transmit the power to the power transmission member and transfer the connection member, which is provided to connect the fractured electrode sheet, along the movement path by the moving member.

### [ADVANTAGEOUS EFFECTS]

According to exemplary embodiments of the present invention, working time can be shortened.

According to exemplary embodiments of the present invention, work efficiency can be improved.

### [DESCRIPTION OF DRAWINGS]

FIG. 1 is a side view illustrating a transfer path of an electrode sheet in a system for transferring an electrode sheet according to one embodiment of the present invention.
FIG. 2 is a perspective view illustrating the system for transferring an electrode sheet according to one embodiment of the present invention.
FIG. 3 is an enlarged view illustrating a shaft member, a rotating member, and a power transmission member of the system for transferring an electrode according to one embodiment of the present invention.
FIG. 4 is a plan view illustrating the system for transferring an electrode sheet according to one embodiment of the present invention.
FIG. 5 is a front view illustrating a moving member, an adhesive member, and a connection member of the system for transferring an electrode according to one embodiment of the present invention.
FIG. 6 is a side view illustrating a movement path of the connection member in the system for transferring an electrode according to one embodiment of the present invention.
FIG. 7 is a side view illustrating a movement path of a connection member in a system for transferring an electrode according to another embodiment of the present invention.

### [MODES OF THE INVENTION]

Hereinafter, exemplary embodiments of the present invention will be described in detail with reference to the accompanying drawings so as to be easily carried out by a person skilled in the art to which the present invention pertains. However, the present invention may be embodied in various different forms and is not limited to the embodiments described herein.

In order to clearly describe the present invention, parts irrelevant to the description are omitted, and descriptions related to well-known functions or configurations are ruled out so as not to unnecessarily obscure subject matters of the present invention. In the specification, when reference numerals are given to components in each of the drawings, the same or similar components will be designated by the same or similar reference numerals throughout the specification.

Also, terms or words used in this specification and claims should not be restrictively interpreted as ordinary meanings or dictionary-based meanings, but should be interpreted as meanings and concepts conforming to the technical ideas of the present invention on the basis of the principle that an inventor can properly define the concept of a term to describe his or her invention in the best ways.

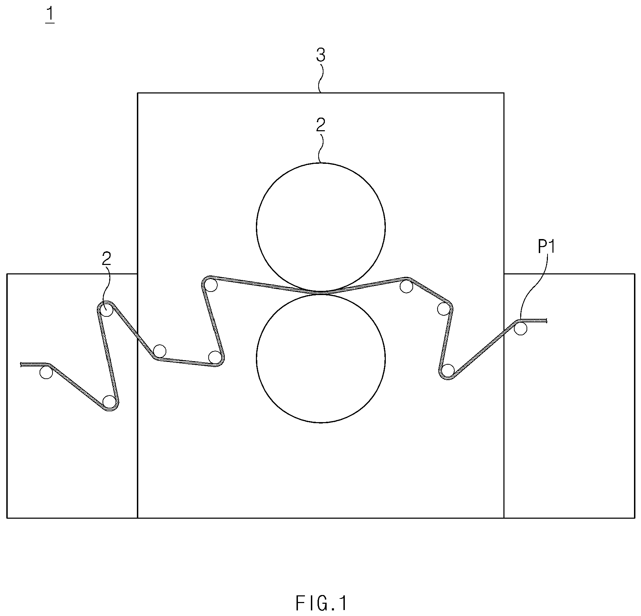

FIG. 1 is a side view illustrating a transfer path of an electrode sheet in a system 1 for transferring a connection member according to one embodiment of the present invention.

The system 1 for transferring a connection member (hereinafter referred to as "transfer system") may be a system capable of transferring an electrode sheet and a connection member capable of connecting the fractured electrode sheet.

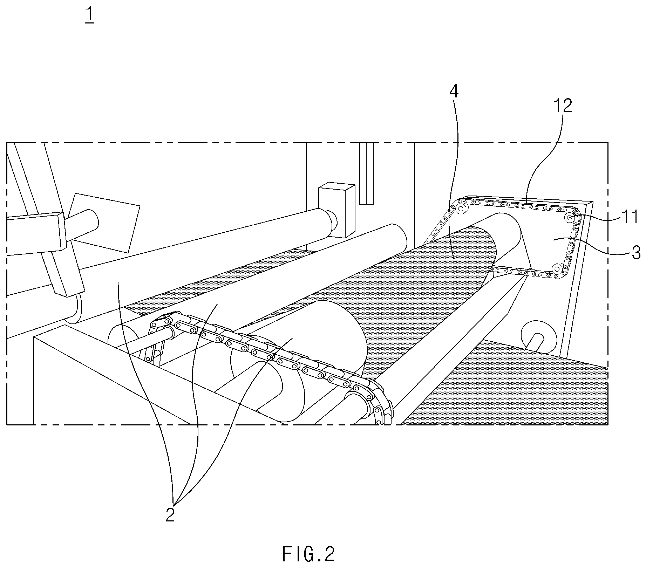

The transfer system 1 may include a plurality of rolls 2. The plurality of rolls 2 may support the electrode sheet (for example, an electrode sheet 4 in FIG. 2). The plurality of rolls 2 support the electrode sheet and may transfer the electrode sheet based on a rotational force.

The plurality of rolls 2 may be disposed to be spaced apart from each other. For example, the plurality of rolls 2 may be disposed to be spaced apart from each other to form a transfer path P1 of the electrode sheet. The transfer path P1 of the electrode sheet may be a path along which the electrode sheet is transferred for a certain process, and the transfer path P1 shown in FIG. 1 is an example and may not be limited thereto.

The transfer system 1 may include a sidewall 3. The sidewall 3 may rotatably support the plurality of rolls 2. For example, the sidewall 3 may be disposed at both sides of the plurality of rolls 2 such that the plurality of rolls 2 are rotatable. However, the present invention is not limited thereto.

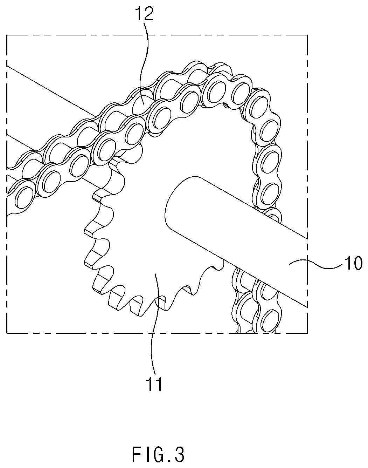

FIG. 2 is a perspective view illustrating the transfer system 1 according to one embodiment of the present invention. FIG. 3 is an enlarged view illustrating a shaft member 10, a rotating member 11, and a power transmission member 12 of the transfer system 1 according to one embodiment of the present invention.

The transfer system 1 may include the rotating member 11. For example, the rotating member 11 may be provided to transmit a rotational force to the power transmission member 12 such that the power transmission member 12, which will be described below, moves. A plurality of rotating members 11 may be disposed on the sidewall 3. The rotating member 11 may include protrusions formed in a circumferential direction to effectively transmit a rotational force to the power transmission member 12. As the rotating member 11 rotates, the protrusions of the rotating member 11 also rotate, thereby effectively moving the power transmission member 12.

The transfer system 1 may include the shaft member 10. For example, a plurality of shaft members 10 may be installed on the sidewall 3. The plurality of shaft members 10 may be installed along the transfer path P1 around the transfer path P1.

The shaft member 10 may support the rotating member 11. For example, the shaft member 10 may support the rotating member 11 such that the rotating member 11 is rotatable around the shaft member 10. The plurality of shaft members 10 may each support one of the plurality of rotating members 11.

The transfer system 1 may include the power transmission member 12. For example, the power transmission member 12 may be installed along the transfer path P1 along which the electrode sheet 4 is transferred. For another example, the power transmission member 12 may be installed such that a separation interval from the transfer path P1 does not exceed a certain interval. The power transmission member 12 may be installed such that a separate path (for example, a movement path of a moving member 20 to be described below) is formed along the transfer path P1 of the electrode sheet 4.

The power transmission member 12 may be mounted on the rotating member 11 and may be moved according to the rotation of the rotating member 11. Specifically, for example, the power transmission member 12 may be a chain, and the chain may be mounted to surround the plurality of rotating members 11. As the plurality of rotating members 11 rotate, the power transmission member 12 mounted to surround the rotating members 11 may be moved in a rotation direction of the rotating members 11.

The power transmission member 12 may be installed along the sidewall 3. For example, the power transmission member 12 may be installed on the sidewall 3 along the transfer path P1 of the electrode sheet 4 when viewed from the side.

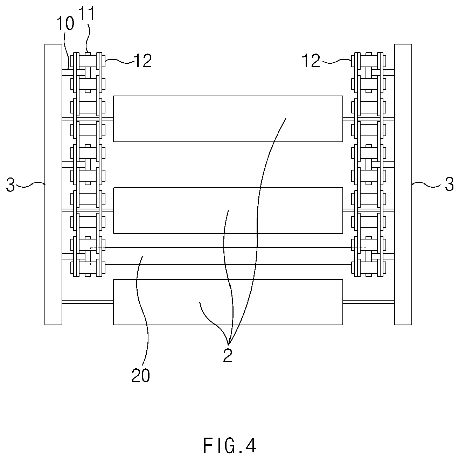

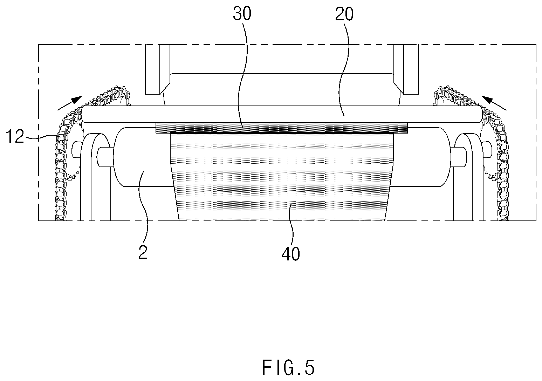

FIG. 4 is a plan view illustrating the transfer system 1 according to one embodiment of the present invention. FIG. 5 is a front view illustrating the moving member 20, an adhesive member 30, and a connection member 40 of the transfer system 1 according to one embodiment of the present invention.

The transfer system 1 may include the moving member 20. For example, the moving member 20 may be mounted on the power transmission member 12. The moving member 20 is mounted on the power transmission member 12 and may move according to the movement of the power transmission member 12.

The moving member 20 may move along a certain movement path formed by the movement of the power transmission member 12. For example, the certain movement path may correspond to the arrangement of the power transmission member 12.

The moving member 20 may include a rod. For example, the moving member 20 may be a long bar-shaped rod and may be moved by being mounted at the power transmission member 12 having a chain shape. However, there may be no special restriction.

The connection member 40 may be a member that may connect fractured areas of the existing electrode sheet 4 when the electrode sheet 4 being transferred is fractured. For example, the connection member 40 may include a polyethylene terephthalate (PET) film. The fractured areas of the electrode sheet 4 may be connected through the connection member 40 that is the PET film. For another example, the connection member 40 may be an additional electrode sheet that is distinguished from the electrode sheet 4 being transferred.

The transfer system 1 may include the adhesive member 30. The adhesive member 30 may bond the moving member 20 and the connection member 40. For example, the adhesive member 30 may bond the connection member 40 and the moving member 20 such that the connection member 40 is transferred according to the movement of the power transmission member 12.

The adhesive member 30 may include double-sided tape. For example, the adhesive member 30 is double-sided tape, and one surface thereof may be attached to the moving member 20 and the other side thereof may be attached to the connection member 40.

The connection member 40 may be moved along a certain transfer path P2 according to the movement of the moving member 20. The certain transfer path P2 may be a certain movement path formed according to the movement of the power transmission member 12. In other words, the transfer path P2 may be a path corresponding to the arrangement of the power transmission member 12.

As described above, the connection member 40 may be efficiently transferred to an area (or a target area), in which the electrode sheet 4 is fractured, through the moving member 20.

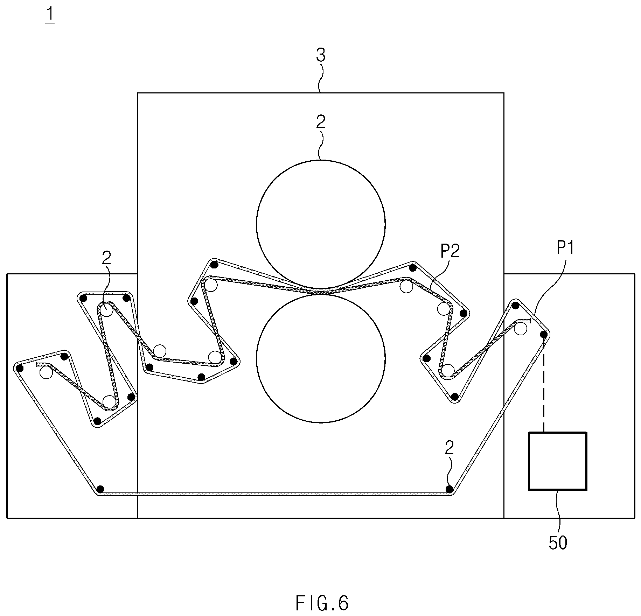

FIG. 6 is a side view illustrating a movement path of the connection member 40 in the transfer system 1 according to one embodiment of the present invention.

The transfer system 1 may include a power generation unit 50. The power generation unit 50 may generate power to be transmitted to the power transmission member 12. The power generation unit 50 may be electrically connected to the rotating member 11 and may transmit power to the rotating member 11. The power generation unit 50 may be a motor, but is not limited thereto.

The power generation unit 50 may provide power to the rotating member 11 and may temporarily stop the provision of power when the moving member 20 reaches the target area. In other words, the power generation unit 50 may control power to be supplied or stopped.

The power generation unit 50 may be installed at an initial point at which the connection member 40 is transferred. For example, the power generation unit 50 may be installed in an area in which the connection member 40 starts to be transferred and may be electrically connected to the rotating member 11 installed in the area.

The plurality of rotating members 11 may be provided and may be structurally connected by the power transmission member 12. For example, the power transmission member 12 may be wound to surround the plurality of rotating members 11, and when one rotating member 11 is rotated, power due to a rotational force may be transmitted to the remaining rotating members 11.

When the electrode sheet 4 is fractured, in order to connect the fractured electrode sheet 4 using the connection member 40, the power generation unit 50 may transmit power to the power transmission member 12 to transfer the connection member 40.

The power generation unit 50 may generate power to rotate the rotating member 11, and the power generation unit 50 may transmit power to the rotating member 11 to rotate the rotating member 11. When the rotating member 11 rotates, the power transmission member 12 mounted on the rotating member 11 may also move. When the power transmission member 12 moves, the moving member 20 mounted at the power transmission member 12 may also move.

The connection member 40 may be transferred along the transfer path P2. For example, as the power transmission member 12 moves, the connection member 40 attached to the moving member 20 by the adhesive member 30 may be transferred along the transfer path P2. In other words, the connection member 40 may be transported by the moving member 20 along the transfer path P2 or a movement path of the power transmission member 12.

The transfer path P2 may correspond to the movement path of the power transmission member 12. The movement path of the power transmission member 12 may correspond to a movement path of the moving member 20.

The movement path of the moving member 20 may correspond to the transfer path P2 of the connection member 40.

The power transmission member 12 may form a closed curve. For example, as shown in FIG. 6, the rotating members 11 may be disposed to be spaced apart from each other such that a closed curve is formed when the power transmission member 12 is mounted. In other words, the power transmission member 12 may be installed on a closed curve to circulate the moving member 20 on the closed curve when viewed from the side.

When the power transmission member 12 is installed to form a closed curve, the power transmission member 12 may circulate on the closed curve when power is transmitted by the power generation unit 50. The moving member 20 may circulate on the closed curve along the power transmission member 12.

The power transmission unit 50 may provide power to the power transmission member 12 circulating on the closed curve to move the moving member 20 to the target area.

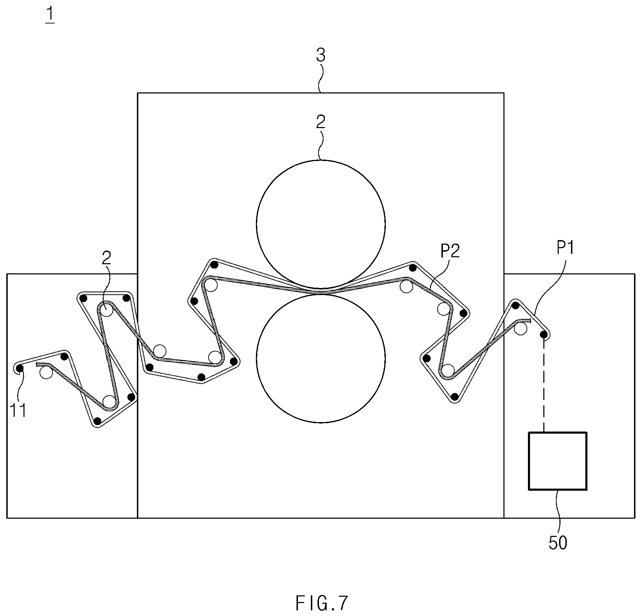

FIG. 7 is a side view illustrating a movement path of a connection member in a transfer system according to another embodiment of the present invention.

The power transmission member 12 may be provided to allow the moving member 20 to reciprocate. For example, as shown in FIG. 7, the rotating members 11 may be disposed to be spaced apart so that an open curve is formed when the power transmission member 12 is mounted. In other words, the power transmission member 12 may be installed on an open curve to reciprocate the moving member 20 on the open curve when viewed from the side.

When the power transmission member 12 is installed to form an open curve, the power transmission member 12 may reciprocate on the open curve when power is transmitted by the power generation unit 50. The moving member 20 may reciprocate on the open curve along the power transmission member 12.

The power transmission unit 50 may provide power to the power transmission member 12 circulating on the open curve to move the moving member 20 to a target area.

As described above, when the electrode sheet 4 is fractured while being transferred, the connection member 40 may be efficiently transferred to a fractured area. In addition, the fractured electrode sheet 4 may be efficiently/effectively connected using the transferred connection member 40.

As described above, although the present invention has been described by way of limited embodiments and drawings, but the present invention is not limited thereto, and various embodiments may be made by a person skilled in the art to which the present invention pertains within the technical idea of the present invention and equivalent scope of the appended claims.

### [Description of reference numerals]

1: transfer system
2: plurality of rolls
3: sidewall
4: electrode sheet
10: shaft member
11: rotating member
12: power transmission member
20: moving member
30: adhesive member
40: connection member
50: power generation unit
P1: transfer path of electrode sheet
P2: transfer path of connection member

## Claims

1. A system for transferring a connection member, the system comprising:
a power transmission member installed along a transfer path along which an electrode sheet is transferred;
a moving member mounted on the power transmission member and moving along a certain movement path according to movement of the power transmission member; and
a power generation unit configured to generate power to be transmitted to the power transmission member,
wherein, when the electrode sheet is fractured, the power generation unit is provided to transmit the power to the power transmission member and transfer the connection member, which is provided to connect the fractured electrode sheet, along the movement path by the moving member.

2. The system of claim 1, further comprising a plurality of rolls configured to support the electrode sheet and transfer the electrode sheet based on a rotational force and provided to be spaced apart from each other to form the transfer path of the electrode sheet.

3. The system of claim 2, further comprising a sidewall configured to rotatably support the plurality of rollers at a side of the plurality of rolls,
wherein the power transmission member is installed along the sidewall.

4. The system of claim 2, wherein the power transmission member is installed on the movement path to reciprocate the moving member along the movement path when viewed from a side.

5. The system of claim 2, wherein the power transmission member is installed on one closed curve to circulate the moving member on the closed curve when viewed from a side.

6. The system of claim 1, further comprising an adhesive member configured to bond the connection member and the moving member such that the connection member is transferred according to the movement of the power transmission member.

7. The system of claim 6, wherein the adhesive member includes double-sided tape.

8. The system of claim 1, wherein the power transmission member includes a chain.

9. The system of claim 8, wherein the moving member includes a rod, and
the rod is provided to be mounted on the chain and moved.

10. The system of claim 1, wherein the movement path of the moving member corresponds to the transfer path of the connection member.

11. The system of claim 1, wherein the power generation unit includes a motor.

12. The system of claim 1, wherein the connection member includes a polyethylene terephthalate (PET) film.

13. The system of claim 1, wherein the connection member is an additional electrode sheet that is distinguished from the electrode sheet.

14. The system of claim 1, further comprising a rotating member provided to transmit a rotational force to the power transmission member to move the power transmission member, and a shaft member provided to support the rotating member.
